## Europäisches Patentamt

## European Patent Office

## Office européen des brevets

(11) Veröffentlichungsnummer: **0 234 469**
**A2**

(12) **EUROPÄISCHE PATENTANMELDUNG**

(21) Anmeldenummer: **87102137.4**

(22) Anmeldetag: **16.02.87**

(51) Int. Cl.³: **F 16 C 13/02**

(30) Priorität: **21.02.86 IT 1951586**

(43) Veröffentlichungstag der Anmeldung:
**02.09.87 Patentblatt 87/36**

(84) Benannte Vertragsstaaten:
**DE ES FR GB IT**

(71) Anmelder: **Mazzoni, Ermenegildo**
**Via Fraschini 10**
**I-28026 Omegna (Novara)(IT)**

(72) Erfinder: **Mazzoni, Ermenegildo**
**Via Fraschini 10**
**I-28026 Omegna (Novara)(IT)**

(74) Vertreter: **de Dominicis, Riccardo et al,**
**de Dominicis & Partners s.a.s. Via Brera, 6**
**I-20121 Milano(IT)**

(54) **Waelzlager fuer Lenkrollen von Laufwagen und dergleichen, insbesondere grosser und mittlerer Tragkraft.**

(57) Ein Waelzlager fuer Lenkrollen von Laufwagen und dergleichen, beispielsweise Strassenkarren fuer Muell, industrielle Transportkarren, Supermarktwagen und dergleichen, bestehend aus einem im wesentlichen plattenfoermigen ersten Teil (2), einem zweiten Buegelteil (3) zum Tragen der Lenkrolle (1a), einem tellerfoermigen fuer Axialbelastungen als Entgegenwirkungselement wirkenden dritten Teil (4), zwei Waelzkraenze (7,8) fuer Axialbelastungen und Verbindungsmitteln (6) zur gegenseitigen Verbindung zwischen dem genannten ersten Lagerteil (2), zweiten Lagerteil (3) und dritten Lagerteil (4), wobei beim vorgeschlagenen Waelzlager (1) ein dritter Waelzkranz (10) zur Aufnahme der Radialbelastungen vorgesehen ist.

Durch die kombinierte Zusammenwirkung der beiden Waelzkraenze (7,8) fuer Axialbelastungen und des Waelzkranzes (10) fuer Radialbelastungen wird eine weiche und gleichmaessige Bewegung auch bei beliebiger vorgesehener Nennbelastung erreicht und eingehalten.

*Fig. 2*

Vorliegende Erfindung betrifft ein Waelzlager fuer Lenkrollen von Laufwagen und dergleichen, insbesondere grosser und mittlerer Tragkraft.

Fuer Laufwagen mittlerer und grosser Tragkraft, wie z. B. im Falle von Strassenkarren fuer Muell, Laufwagen fuer industrielle Einsaetze, Grossmarktwagen und dergleichen, werden wie bekannt zur Zeit Waelzlager fuer die Lenkrollen vorgesehen, die sich prinzipiell auf die Verwendung von zwei Kugelwaelzkraenzen stuetzen. Solche Waelzlager umfassen ein im wesentlichen plattenfoermiges erstes Teil, das auf dem Laufwagen od. dgl. zu befestigen ist, ein zweites Buegelteil, das zum Tragen der Lenkrolle dient, und ein im wesentlichen tellerfoermiges drittes Teil, das den Axialbelastungen entgegenwirkt, wobei jeweils zwischen dem ersten und dem zweiten Teil sowie zwischen dem zweiten und dem dritten Teil ein Kugelkranz angeordnet ist. Die Umfangssitze zur Aufnahme dieser Kugeln sind in Form von Presseindruecken erhalten, wobei die genannten zwei Kugelkraenze konzentrisch sind und unterschiedliche Halbmesser aufweisen. Die genannten Lagerteile werden durch Verbindungsmittel miteinander verbunden, die als eingeschlagene Zapfen bzw. Nieten, Schraubenbolzen u. dgl. ausgefuehrt sind.

Bei dieser bekannten Ausfuehrungsform ist der obere Kranz zur Aufnahme von Axialbelastungen vorgesehen, waehrend der untere Kranz als Druckkugellager wirkt. Die Radialbelastungen werden von beiden genannten Kugelkraenzen aufgenommen. In der Praxis weisen bekannten Waelzlager den Nachteil auf, dass beim Auftreten von Radialbelastungen einer bestimmten Groesse wie auch beim Auftreten von nicht genau axialen Belastungen, diese Waelzlager eine zwangslaeufige Verschiebung der Kugeln, die auf einer bestimmten Umfangsstrecke der Kugelkraenze liegen, verursachen, was aufgrund eines Zusammenwirkens von konstruktionsbedingten schiefen Ebenen dazu fuehrt, dass diese Kugeln jeweils zwischen den dieselben tragenden Teilen fest sitzen bleiben. Daraus ergibt sich eine sofortige starke Hemmung der Kugelbewegung, die progressiv zunimmt und je nach der Groesse der jeweils auftretenden Radial- bzw. Schraegbelastungen bis zur Blockierung der Schwenkbewegung selbst fuehren kann.

Auf jeden Fall wird zum Schwenken der Lenkrollen eine wesentlich groessere Kraftanstrengung benoetigt, die auch unter Beruecksichtigung der betreffenden mittleren bzw. schweren Lasten nicht jedesmal vom Bedienungsmann ausgeuebt werden kann.

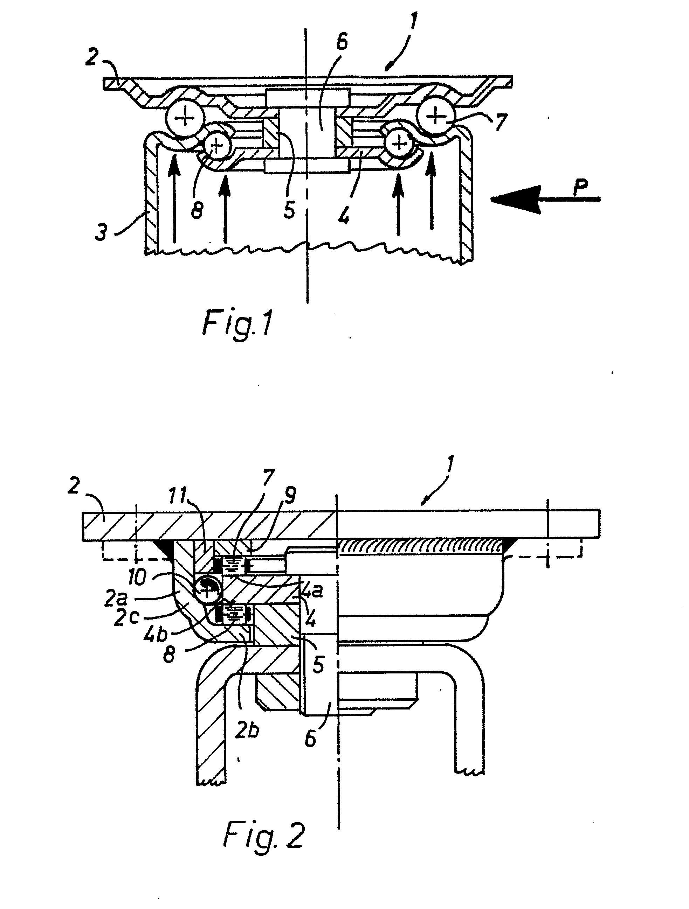

Die Ausbildung des bekannten Waelzlagers sowie die Verschiebung der Kugel in Anwesenheit einer Radialbelastung P sind in Fig. 1 der beiligenden Zeichnungen ersichtlich.

Der vorliegenden Erfindung liegt die Aufgabe zugrunde, ein Waelzlager fuer Lenkrollen von Laufwagen und dergleichen, insbesondere grosser und mittlerer Tragkraft zu schaffen, das faehig ist, bei jedem Ladungszustand des Laufwagens die Beibehaltung der groesstmoeglichen gleitenden Verschiebbarkeit des die Rolle tragenden Buegelteils in bezug auf den Laufwagen zu gewaehrleisten, und dies bei einer Konstruktion, die eine beschraenkte Anzahl von Bestandteilen benoetigt, einfach ausfuehrbar ist und einen hohen Praezisionsgrad aufweist.

Im Rahmen der oben genannten Aufgabe liegt es auch, eine Waelzlagerkonstruktion vorzusehen, die es erlaubt, das Auftreten von funktionellen Spielen zwischen den verschiedenen Waelzlagerteilen praktisch auszuschliessen.

Erfindungsgemaess wird die oben genannte Aufgabe durch ein Waelzlager obiger Bauart geloest, das die im Kennzeichen des Anspruchs·1 angegebenen Merkmale aufweist.

Die Kennzeichen der Ansprueche 2, 3 und 4 verdeutlichen weitere Besonderheiten von vorteilhaften Abwandlungen vorliegender Erfindung.

Weitere vorteilhafte Merkmale sind aus den Kennzeichen der weiteren Unteransprueche zu entnehmen.

Bei den erfindungsgemaessen Waelzlagern, die einen dritten Waelzkranz fuer die Aufnahme von Radialbelastungen vorsehen, wird vorteilhafterweise eine weiche und gleichmaessige Schwenkbewegung immer mit Sicherheit erreicht bzw. beibehalten, abgesehen von den jeweils auf dem Wagen geladenen Lasten, sowie von der Wirkung von etwaigen Radial- bzw. Schraegbelastungen auf die einzelnen Waelzlager der Lenkrollen.

Noch ein weiterer Vorteil der erfindungsgemaessen Waelzlager ist in einer gedraengten Bauweise und, indirekterweise, in einem beschraenkten Platzbedarf zu sehen. Bei einer vorbestimmten Hoehe der oberen Kante der Laufwagen in bezug auf die Auflageflaeche der Rollen kann man auf diese Weise die Tiefe dieser Laufwagen, d.h. das Fassungsvermoegen derselben, erhoehen.

Ein weiterer Vorteil der vorgeschlagenen Waelzlager besteht darin, dass eine beschraenkte Anzahl von Bestandteilen benoetigt wird, wobei dieselben keine besonderen spanabhebenden Bearbeitungen erfordern.

Die erfindungsgemaessen Waelzlager sind ferner dadurch vorteilhaft, dass die beiden Waelzkraenze fuer Axialbelastungen deckungsgleich und gleichachsig angeordnet werden koennen, wodurch sie eine hoechste Belastbarkeit aufweisen.

Ein weiterer Vorteil der vorgeschlagenen Waelzlager besteht ferner darin, dass die vorgeschlagene Waelzlagerbauweise es erlaubt, nicht nur Kugeln, sondern auch Rollen zu verwenden. Dies ist bei Waelzkraenzen fuer Axialbelastungen bzw. uebereinanderstehenden Waelzkraenzen besonders vorteilhaft.

Als weiterer Vorteil hat sich dabei erwiesen, dass die Herstellung der Waelzbahnen fuer die drei Waelzkraenze mit einem minimalen Fabrikationsaufwand, d.h. mit einer beschraenkten Anzahl von Arbeitsgaengen fuer Bearbeitung und Montage, ausgefuehrt werden kann.

Weitere Merkmale, Vorteile und Einzelheiten der erfindungsgemaessen Waelzlager ergeben sich naeher aus der nachfolgenden Beschreibung anhand der beiliegenden Zeichnungen, die rein schematisch verschiedene vereinfachte Ausfuehrungsformen darstellen.

Es zeigen:

Fig. 1 einen Ausschnitt in mittlerem Vertikalschnitt durch ein Waelzlager bekannter Bauart, und

4

Fig. 2, 3, 4 und 5 jeweils zur rechten Haelfte in vertikaler Teilansicht und zur linken Haelfte in vertikalem Teilschnitt gezeichnete Darstellungen von nach der Lehre vorliegender Erfindung hergestellten Waelzlagern.

Es wird zuerst auf Fig. 1 Bezug genommen, bei der mit 1 das Waelzlager einer Lenkrolle fuer mittlere und grosse Tragkraft nach dem bekannten Stand der Technik bezeichnet ist. Das Waelzlager weist ein erstes Teil 2 auf, das auf einem nicht gezeichneten Laufwagen oder dergleichen zu befestigen ist.

Mit 3 ist ein zweites als Buegel ausgefuehrtes Buegelteil bezeichnet, das zum Tragen der Lenkrolle 1a dient. Ein drittes im wesentlichen tellerfoermiges Teil des Waelzlagers 1 ist mit 4 bezeichnet und dient als Entgegenwirkungselement fuer Axialbelastungen. Zwischen dem ersten und dritten Teil 2, 4 ist ein Distanzring 5 angeordnet. Mit 6 ist ein Verbindungs- bzw. Zusammenbauelement bezeichnet, das nach Art eines eingeschlagenen Zapfens bzw. eines Schraubenbolzens oder eines Niets ausgebildet ist. Die zwei Kugelwaelzkraenze sind mit 7 bzw. 8 bezeichnet. Wie deutlich ersichtlich, sind die Lagerkugelsitze durch Presseindruecke erhalten. Wenn die zwei Kugelwaelzkraenze 7 und 8 von einer Radialbelastung P beaufschlagt werden, verhalten sie sich in der in der Zeichnung dargestellten Weise, wodurch die Kugeln einer kurzen Umfangsstrecke gezwungen werden, eine Schiebebewegung auszufuehren, die zur Blockierung derselben fuehrt. Obwohl diese Waelzlager zur Aufnahme von Axialbelastungen zufriedenstellend sind, sind dieselben gegen Radialbelastungen empfindlich.

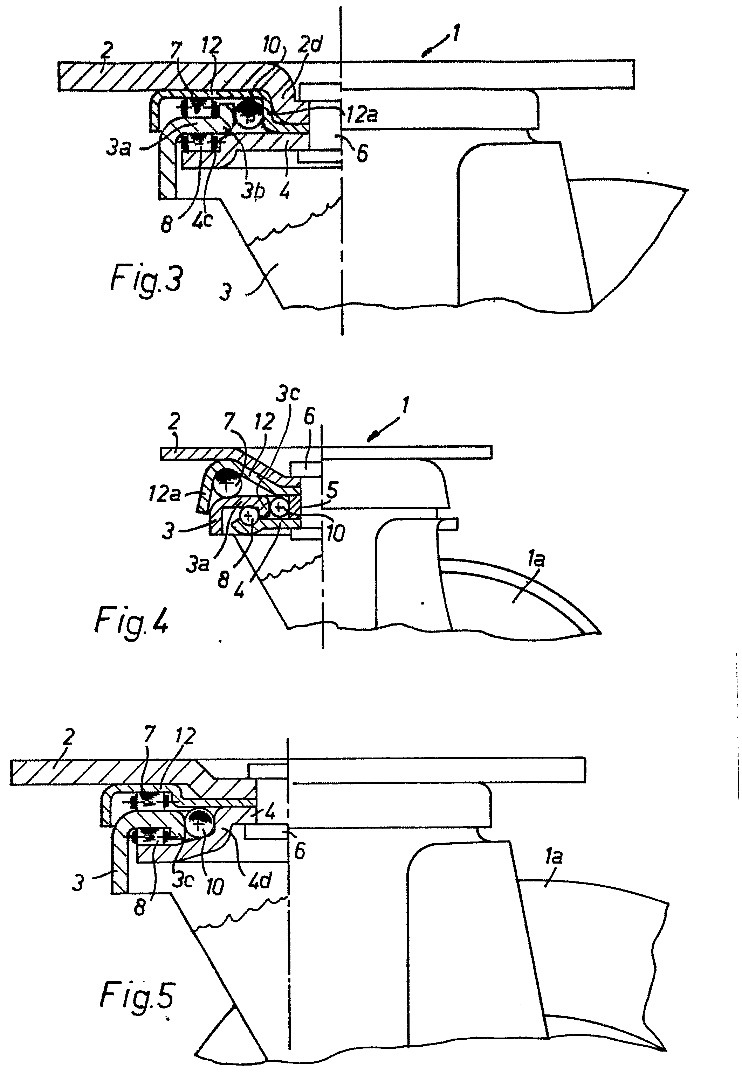

Es wird nunmehr auf die erfindungsgemaessen Waelzlager Bezug genommen, die in Fig. 2 - 5 gezeigt sind. Das in Fig. 2 dargestellte Waelzlager ist fuer besonders hohe Belastungen vorgesehen. Bei diesem Waelzlager ist dem ersten Lagerteil 2 eine profilierte Aufnahmehaube 2a zugeordnet, die beispielsweise geschweisst oder, wie gestrichelt gezeichnet, durch Umboerdelung und Schrauben verbunden ist, wobei die Aufnahmehaube unten nach innen in 2b geboerdelt ist. Ein Beilagering 5 ist zwischen dem zweiten Buegelteil 3 und dem tellerfoermigen dritten Teil 4 angeordnet. Dieses letztere besitzt an seinen einander gegenueberliegenden Seiten 4a, 4b jeweils eine Waelzbahn fuer den oberen Waelzkranz 7 und fuer den unteren Waelzkranz 8 auf. Der obere Kranz 7 ist zwischen diesem dritten Teil 4 und dem ersten Lagerteil 2, und zwar durch eine zwischenliegende temperierte Spurplatte 9 angeordnet. Wie aus der Zeichnung ersichtlich, ist der untere Kranz 8 zwischen dem genannten dritten Teil 4 und der unteren Boerdelung 2b der profilierten Aufnahmehaube 2a angeordnet. Diese profilierte Aufnahmehaube 2a weist eine Profilierung in Form einer abgerundeten Stufe 2c auf, die dazu dient, die Kugelelemente in der Senkrechten zu halten, aus welchen der dritte Waelzkranz besteht, der besonders zur Aufnahme der Radialbelastungen vorgesehen ist.

An der Innenseite ist dieser Waelzkranz 10 durch das tellerfoermige dritte Teil 4 gelagert. Mit 11 ist ein Positionierbund fuer die Kugeln des dritten Waelzkranzes 10, vorzugsweise aus Kunststoff, bezeichnet. Dieser Positionierungsbund dient gleichzeitig als Zentrierungsglied fuer die Spurplatte 9 waehrend der Montage der Aufnahmehaube 2a auf dem Teil 2 zur Schweissung. Um eine einwandfreie Anlagestellung der verschiedenen Teile untereinander, die am Tragen der zwei Waelzkraenze 7, 8 beteiligt sind, zu gewaehrleisten, weist die Aufnahmehaube 2a einen kleinen Spalt in bezug auf das Lagerteil 2 auf, wobei dieser Spalt jedenfalls durch die Umfangsschweissung verborgen ist.

Im dargestellten Beispiel sind die zwei Waelzkraenze 7, 8 durch Rollen gebildet. In der in Fig. 3 gezeigten Ausfuehrungsform weist das erste Lagerteil 2 einen Absatz 2d auf, gegen welchen sich der Absatz 12a einer Zwischenhaube 12 abstuetzt, die zwischen dem genannten tellerfoermigen dritten Teil 4 und dem ersten Teil 2 liegt. Das Buegelteil 3 weist oben eine nach innen gerichtete Boerdelung 3a auf, an die vorzugsweise eine nach oben gerichtete Umbiegung 3b angeschlossen ist. Zwischen dieser letzteren und dem oben erwaehnten Absatz 12a der Zwischenhaube 12 ist ein dritter Kranz aus Kugeln 10 fuer Radialbelastungen gelagert. Der obere Kranz 7 fuer die Axialbelastungen ist zwischen der genannten Boerdelung 3a des Buegelteils 3 und der darueber stehenden Zwischenhaube 12 gelagert, waehrend der untere Waelzkranz 8 zwischen der genannten Boerdelung 3a des Buegelteils 3 und einer Vertiefung 4c gelagert ist, die im tellerfoermigen Teil 4 erhalten ist. Diese Loesung ist insbesondere fuer mittlere Lasten geeignet und zeichnet sich durch eine einfache Konstruktion und einen leichten Zusammenbau aus. Auch in diesem Falle sind die Waelzkraenze 7, 8 fuer Axialbelastungen zueinander deckungsgleich.

Das in Fig. 4 gezeigte Waelzlager ist fuer beliebige Tragkraefte und besonders fuer die Faelle vorgesehen, bei welchen bei einer aeusserst einfachen Konstruktion eine einwandfreie Betriebsweise und eine weiche Schwenkbewegung der Lenkrolle auch unter schweren Lastbedingungen erwuenscht werden. Bei dieser Ausfuehrung weist das zweite Teil 3 nach der Boerdelung 3a nach innen eine nach unten gerichtete Umbiegung 3c auf. Die Zwischenhaube 12 ist durch einen Distanzring 5 vom dritten Teil 4 mit Abstand angeordnet. Das dritte tellerartige Teil 4 weist an und fuer sich eine an sich bekannte Gestaltung auf. Waehrend der obere Kranz 7 und der untere Kranz 8 jeweils zwischen der genannten Zwischenhaube 12 und dem Buegelteil 3 bzw. zwischen diesem letzteren und dem tellerfoermigen dritten Teil 4 gelagert sind, ist der erfindungsgemaess vorgesehene dritte Waelzkranz 10 zwischen der nach unten gerichteten Umbiegung 3c des Buegelteils 3 und dem erwaehntem Distanzring 5 gelagert.

Die Kugeln des genannten dritten Kranzes 10 sind in der Senkrechten durch die genannte Zwischenhaube 12 und das tellerfoermige dritte Teil 4 positioniert.

Unter Bezugnahme auf Fig. 5 ergibt sich, dass das zweite Buegelteil 3 eine Ausbildung ausweist, die der in Fig. 4 dargestellten Gestaltung aehnlich ist. Prinzipiell gilt dasselbe fuer die Zwischenhaube 12. Das tellerfoermige dritte Teil 4 besitzt jedoch einen Absatz 4d, wobei zwischen den lezteren und der Umbiegung 3c des Buegelteils 3 der fuer Radialbelastungen vorgesehene Waelzkranz 10 angeordnet ist. Derselbe ist in der Senkrechten unten vom tellerfoermigen Teil 4 selbst und oben von der genannten Zwischenhaube 12 gehalten. Die Lagerung der zwei fuer Axialbelastungen vorgesehenen Waelzkraenze 7, 8 ist aehnlich der nach Fig. 3 erlaeuterten Lagerung.

Aus den obigen strukturellen Beschreibungen der erfindungsgemaessen Waelzlager geht deutlich hervor, dass die letzteren es ermoeglichen, die der vorliegenden Erfindung zugrunde liegende Aufgabe wirksam zu loesen und die im Einleitungsteil erwaehnten Vorteile zu erreichen. Das Waelzlager von Fig. 2 ist, wie schon erwaehnt, fuer besonders hohe Belastungen vorgesehen, waehrend die in Fig. 3 und 5 gezeigten Ausfuehrungsformen fuer mittlere Belastungen geeignet sind und die Ausfuehrungsform nach Fig. 4 fuer den Fall vorzusehen ist, wenn, abgesehen von der Tragkraft, eine zuverlaessige Betriebsweise bei einer einfachen und billigen Bauweise, die noch leichter herzustellen oder zu montieren ist, erwuenscht wird. Bei den Beispielen der Fig. 3, 4 und 5 ist der fuer Radialbelastungen vorgesehene Waelzkranz 10 im Innern der fuer Axialbelastungen vorgesehenen Waelzkraenz 7, 8 vorgesehen. Ausserdem erfolgt bei diesen Beispielen der Zusammenbau der verschiedenen Lagerteile nicht durch Schweissung oder Flanschanschluesse mit Schraubungen, sondern durch einen einfachen Schraubenbolzen bzw. einen Niet verwirklicht. Dies gibt die Moeglichkeit, bei einer einen aeusserst beschraenkten strukturellen Aufwand erfordernden Konstruktion optimale funktionelle Ergebnisse zu erzielen.

Im Rahmen vorliegender Erfindung liegt auch die Moeglichkeit, einzelne Teile durch weitere in technischer und/oder funktioneller Hinsicht aequivalente Teile zu ersetzen, ohne dadurch den Schutzrahmen vorliegender Erfindung zu ueberschreiten. Zum Beispiel ist es moeglich, eine strukturelle Vereinfachung oder eine noch billigere Ausfuehrung dadurch zu erreichen, dass die dargestellten Zwischenhauben 12 weggelassen und die Waelzelemente des/der Waelzkranzes/Waelzkraenze direkt auf dem plattenfoermigen ersten Teil 2 des Waelzlagers rollen gelassen werden, das

8

auf dem Laufwagen zu befestigen ist.

Abmessungen und Werkstoffe sowie die einzelnen Waelzelemente der drei Waelzkraenze koennen beliebig gewaehlt werden, ohne dadurch ebenfalls den Schutzrahmen vorliegender Erfindung zu verlassen.

Alle der Beschreibung, den Anspruechen sowie den Zeichnungen entnehmbaren Merkmale sind als erfindungswesentlich sowohl einzeln als auch in beliebiger Kombination zueinander zu betrachten.

0234469

Patentansprueche

1. Waelzlager fuer Lenkrollen von Laufwagen und dergleichen, insbesondere grosser und mittlerer Tragkraft, bestehend aus

i. einem im wesentlichen plattenfoermigen ersten Teil (2), das auf dem Laufwagen oder dergleichen zu befestigen ist,

ii. einem zweiten Buegelteil (3) zum Tragen der Lenkrolle (1a),

iii. einem im wesentlichen tellerfoermigen dritten Teil (4), das den Axialbelastungen entgegenwirkt,

iv. zwei konzentrischen Waelzkraenzen (7,8) zur Aufnahme der Axialbelastungen,

v. Verbindungsmitteln (6) zur gegenseitigen Verbindung des genannten ersten Teils (2), zweiten Teils (3) und dritten Teils (4) des Waelzlagers,

dadurch gekennzeichnet, dass im Waelzlager ein dritter Waelzkranz (10) zur Aufnahme der Radialbelastungen vorgesehen ist.

2. Waelzlager nach Anspruch 1, dadurch gekennzeichnet, dass die Waelzelemente des genannten dritten Waelzkranzes (10) zwischen dem im wesentlichen tellerfoermigen dritten Teil (4) und dem genannten ersten oder zweiten Teil (2 bzw. 3) des Waelzlagers aufgenommen sind, wobei der genannte erste oder zweite Teil (2 bzw. 3) Positionierungsmittel (2c bzw. 3c) zur Positionierung der Waelzelemente des genannten dritten Waelzkranzes (10) zur Aufnahme der Radialbelastungen aufweist. (Fig. 2, 5)

3. Waelzlager nach Anspruch 1, dadurch gekennzeichnet, dass die Waelzelemente des genannten dritten Waelzkranzes (10) zwischen dem genannten zweiten Buegelteil (3) und einem inneren Anschlag (12a,5) aufgenommen sind, wobei der genannte dritte Waelzkranz (10) im Inneren in bezug auf die beiden Waelzkraenze (7,8) zur Aufnahme der Axialbelastungen angeordnet ist. (Fig. 3, 4)

4. Waelzlager nach Anspruch 1 und 2, dadurch gekennzeichnet, dass

i. dem ersten Lagerteil (2) eine Aufnahmehaube (2a) zugeordnet ist, die konstruktionsmaessig profiliert (2c) und unten nach innen geboerdelt (2b) ist,

ii. das tellerfoermige dritte Teil (4) scheibenfoermig ausgebildet ist, durch Zwischenlegung eines Distanzringes (5) dem zweiten Buegelteil (3) zugeordnet ist und an seinen einander gegenueberliegenden Seiten (4a, 4b) je eine Waelzbahn fuer den oberen Waelzkranz (7), der zwischen dem genannten tellerfoermigen dritten Teil (4) und dem plattenfoermigen ersten Lagerteil (2) angeordnet ist, und fuer den unteren Waelzkranz (8), der zwischen den genannten tellerfoermigen dritten Teil (4) und der nach innen gerichteten Boerdelung (2b) der genannten profilierten Aufnahmehaube (2a) angeordnet ist, aufweist,

iii. der dritte Waelzkranz (10) zur Aufnahme der Radialbelastungen zwischen dem genannten tellerfoermigen Teil (4) und der genannten profilierten Aufnahmehaube (2a) an der genannten Profilierung (2c) gelagert und positioniert ist, wobei der genannte dritte Waelzkranz (10) ausserhalb der genannten zwei Waelzkraenze (7,8) zur Aufnahme der Axialbelastungen angeordnet ist. (Fig. 2)

5. Waelzlager nach Anspruch 4, dadurch gekennzeichnet, dass eine Spurplatte (9) zwischen dem oberen Waelzkranz (7) und dem genannten plattenfoermigen ersten Lagerteil (2) eingesetzt ist.

6. Waelzlager nach Anspruch 4 und 5, dadurch gekennzeichnet, dass ein Zentrierungsbund (11) zwischen der genannten Spurplatte (9) und der genannten Aufnahmehaube (2a) eingesetzt ist, wobei dieser Zentrierungsbund vorzugsweise einen Anschlag zur oberen Positionierung der Waelzelemente des genannten dritten Waelzkranzes (10) zur Aufnahme der Radialbelastungen bildet.

7. Waelzlager nach Anspruch 1 und 3, dadurch gekennzeichnet, dass

i. das im wesentlichen plattenfoermige erste Teil (2) eine mittlere bundfoermige Vertiefung (2d) aufweist,

ii. das zweite Buegelteil (3) oben eine nach innen gerichtete waagerechte Boerdelung (3a) mit anschliessender nach oben gerichteter Umbiegung (3b) aufweist,

iii. die zwei Waelzkraenze (7,8) zur Aufnahme der Axialbelastungen so angeordnet sind, dass der erste Waelzkranz (7) zwischen der oberen Seite der Boerdelung (3a) des zweiten buegelfoermigen Teils (3) und einer dem im wesentlichen plattenfoermigen ersten Teil (2) zugeordneten Zwischenhaube (12) liegt, waehrend der zweite Waelzkranz (8) zwischen der unteren Seite der genannten Boerdelung (3a) und einer im tellerfoermigen dritten Teil (4) eingearbeiteten Vertiefung (4c) liegt,

iv. der dritte Waelzkranz (10) zur Aufnahme von Radialbelastungen zwischen der genannten nach oben gerichteten Umbiegung (3b) des zweiten Buegelteils (3) und einem Absatz (12a) der genannten Zwischenhaube (12) angeordnet ist, die dem plattenfoermigen ersten Teil (2) des Lagers zugeordnet ist. (Fig. 3)

8. Waelzlager nach Anspruch 1 und 3, dadurch gekennzeichnet, dass

i. das zweite Buegelteil (3) oben eine nach innen gerichtete waagerechte Boerdelung (3a) aufweist, an welche sich eine im wesentlichen senkrechte und nach unten gerichtete Umbiegung (3c) anschliesst,

ii. der obere Waelzkranz (7) zwischen der genannten Boerdelung (3a) des zweiten Buegelteils (3) und einer dem im wesentlichen plattenfoermigen ersten Teil (2) zugeordneten oberen Zwischenhaube (12) gelagert ist, waehrend der zweite Waelzkranz zur Aufnahme von Axialbelastungen (8) zwischen dem genannten zweiten Buegelteil (3) und dem plattenfoermigen dritten Teil (4) gelagert ist,

iii. der dritte Waelzkranz (10) zur Aufnahme der Radialbelastungen zwischen der genannten nach unten gerichteten Umbiegung (3b) des Buegelteils (3) und einem inneren Distanzring (5) angeordnet ist, wobei der genannte dritte Waelzkranz (10) im Inneren in bezug auf beide Waelzkraenze (7,8) zur Aufnahme der Axialbelastungen angeordnet ist. (Fig. 4)

9. Waelzlager nach Anspruch 1 und 2, dadurch gekennzeichnet, dass

i. das zweite Buegelteil (3) eine nach innen gerichtete waagerechte Boerdelung (3a) aufweist, an die sich eine im wesentlichen senkrechte und nach unten gerichtete Umbiegung (3c) anschliesst,

4

wobei an beiden einander gegenueberliegenden Seiten der genannten Boerdelung (3a) je eine Waelzbahn fuer den oberen Waelzkranz (7), welche zwischen der genannten waagerechten Boerdelung (3a) und einer dem genannten plattenfoermigen ersten Lagerteil (2) zugeordneten oberen Haube (12) liegt, und fuer den unteren Waelzkranz (8), der sich zwischen der genannten Boerdelung (3a) und der im wesentlichen tellerfoermigen dritten Teil (4) befindet, vorgesehen ist,

ii. das genannte im wesentlichen tellerfoermige dritte Teil (4) mit einem zwischenliegenden Absatz (4d) profiliert ausgebildet ist, iii. der genannte dritte Waelzkranz (10) zur Aufnahme der Radialbelastungen zwischen der genannten nach unten gerichteten Umbiegung (3c) und dem genannten Absatz (4d) des tellerfoermigen Teils (4) gelagert und positioniert ist. (Fig. 5)

10. Waelzlager nach Anspruch 7 und 8, dadurch gekennzeichnet, dass die dem genannten plattenfoermigen ersten Teil (2) zugeordnete obere Zwischenhaube (12) ein als eine Scheibe ausgebildetes mittleres Teil und eine aeussere Umfangsprofilierung aufweist, deren Profil einem umgekehrten U bzw. V aehnlich ist und deren aeusserer Schenkel (12a) sich bis nahe an die unten liegende Boerdelung (3a) des zweiten Buegelteils (3) erstreckt.

11. Waelzlager nach einem oder mehreren der vorhergehenden Ansprueche, dadurch gekennzeichnet, dass die zwei konzentrischen Waelzkraenze (7,8) fuer Axialbelastungen zueinander deckungsgleich vorgesehen sind.

12. Waelzlager nach einem oder mehreren der vorhergehenden Ansprueche, dadurch gekennzeichnet, dass die zwei Waelzkraenze (7,8) zur Aufnahme der Axialbelastungen als Rollenkraenze vorgesehen sind, waehrend der dritte Waelzkranz (10) zur Aufnahme der Radialbelastungen als Kugelkranz vorgesehen ist.

13. Waelzlager nach Anspruch 1 und 8, dadurch gekennzeichnet, dass alle drei Waelzkraenze (7,8,10) in Form von Kugelkraenzen vorgesehen sind.

Fig.1

Fig. 2

Fig.3

Fig.4

Fig.5